# EUROPÄISCHE PATENTSCHRIFT

(11) **EP 0 927 110 B1**
(45) Veröffentlichungstag und Bekanntmachung des Hinweises auf die Patenterteilung: **29.08.2001**
(21) Anmeldenummer: 97942691.3
(22) Anmeldetag: 17.09.1997
(51) Int. Cl.: B60P 1/44, E05D 9/00

(54) **EINRICHTUNG ZUR LAGERUNG EINES BOLZENS**
MOUNTING BASE FOR A PIN
DISPOSITIF POUR LOGER UNE TIGE

(30) Priorität: 20.09.1996 AT 167896
(43) Veröffentlichungstag der Anmeldung: 07.07.1999
(73) Patentinhaber: Weber, Günter, A-2474 Gattendorf (AT)
(72) Erfinder: Weber, Günter, A-2474 Gattendorf (AT)
(74) Vertreter: Holzer, Walter, Dipl.-Ing.
(86) Internationale Anmeldenummer: AT9700204
(87) Internationale Veröffentlichungsnummer: WO9812067

(56) Entgegenhaltungen:
- EP-A- 0 213 331
- EP-A- 0 273 865
- EP-A- 0 347 744
- FR-A- 1 520 533
- FR-A- 2 442 326
- GB-A- 2 156 898
- US-A- 5 337 451

## Beschreibung

Die Erfindung betrifft eine Einrichtung zur Lagerung eines Bolzens, einer Achse od.dgl. aus Stahl in einem Lagerteil aus Aluminium oder einer Aluminiumlegierung, insbesondere für Schwenkteile von Fahrzeugaufbauten.

Bei der Lagerung von Bolzen od.dgl. aus Stahl in Lageraufnahmen aus Aluminium, wie sie insbesondere bei Ladebordwänden von Kraftfahrzeugen mit Aufbauten bzw. Rahmenteilen angewendet wird, die aus Gründen der Gewichtsersparnis aus Aluminium bestehen, ergibt sich in der Praxis das Problem, daß die Lagerteile nach einiger Zeit infolge Korrosion bzw. elektrochemischer Zersetzung und Festfressen des Bolzens unbrauchbar werden. Um diesem Phänomen zu begegnen, müssen die Lagerteile ständig mit Schmierfett versorgt werden, doch auch diese Maßnahme hält die Korrosion nicht auf.

Die Erfindung zielt darauf ab, eine Einrichtung der einleitend angegebenen Art zu schaffen, welche das erwähnte Problem vermeidet. Die Erfindung schafft demgemäß eine Einrichtung zur Lagerung eines Bolzens, einer Achse od.dgl. aus Stahl in einem Lagerteil aus Aluminium oder einer Aluminiumlegierung, insbesondere für Schwenkteile von Fahrzeugaufbauten, wobei der Lagerteil eine zylindrische Lageraufnahme für den Bolzen, die Achse od.dgl. aufweist und in die Lageraufnahme des Lagerteiles eine Auskleidungsbuchse aus hartanodisiertem Aluminium eingesetzt ist, in welcher der Bolzen od.dgl. fest gelagert ist.

Es hat sich erwiesen, daß auf diese Weise jegliche Gefahr von Korrosionserscheinungen vermieden und eine Lagerung mit langer Lebensdauer erzielt werden kann.

Zum allgemeinen Stand der Technik sei erwähnt, daß aus der EP-0 273 865 A2 eine schwenkbar gelagerte Ladeplattform aus Leichtmetall bekannt ist, bei welcher Anschlußköpfe aus einem Strangpreßprofil gebildet sind, das über eine Sockelplatte mit der Plattform verschraubt ist. Von der Sockelplatte ragen Anschlußlaschen mit üblichen Achsaugen für einen Gelenkbolzen ab. Zur Aufnahme von Hydraulikeinrichtungen sind auch Augöffnungen mit Auskleidungsbuchsen vorgesehen. Über die Ausbildung der Achsaugen bzw. Auskleidungsbuchsen sagt die EP-0 273 865 nichts aus. In dieser Druckschrift werden somit weder die Aufgabe noch die spezielle Lösung der vorliegenden Erfindung angesprochen.

Die Erfindung wird nachfolgend an einem Ausführungsbeispiel näher erläutert.

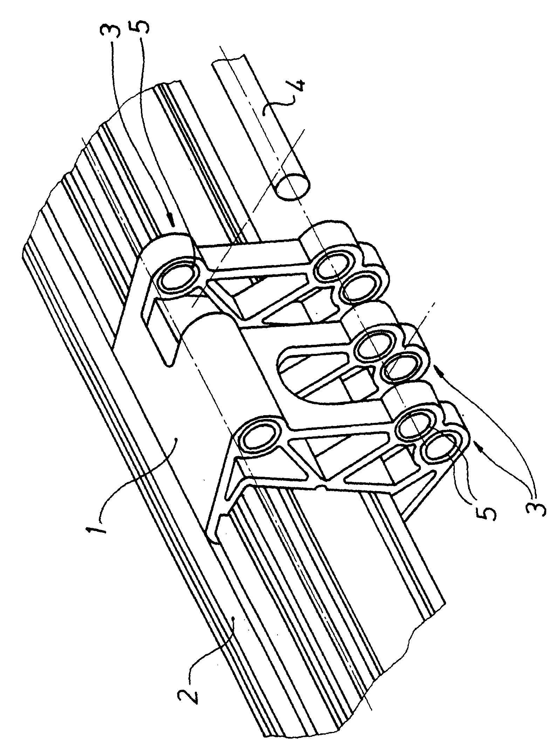

Die Zeichnung zeigt eine Perspektivansicht eines Lagerteiles für die Anlenkung von (nicht gezeigten) Schwenkteilen eines Fahrzeugaufbaus mit Hilfe eines Bolzens aus Stahl.

Der aus Aluminium bestehende Lagerteil 1, der an einem ebenfalls aus Aluminium bestehenden Träger 2 befestigt ist, ist mit mehreren voneinander beabstandeten zylindrischen Lageraufnahmen 3 versehen, zwischen welche ebenfalls aus Aluminium bestehende (nicht gezeigte) Schwenkteile eines Fahrzeugaufbaus, z.B. die Hubarme einer Ladebordwand, eingesetzt und mittels eines alle koaxialen Lageraufnahmen 3 durchsetzenden Bolzens 4 bzw. einer Achse aus Stahl schwenkbeweglich gelagert werden. Um der Gefahr von Korrosion nach längerer Betriebsdauer vorzubeugen, sind in alle Lageraufnahmen 3 Auskleidungsbuchsen 5 aus hartanodisiertem Aluminium eingepreßt, welche die eigentliche Lagerfläche bilden. Die Auskleidungsbuchsen haben z.B. eine Wandstärke von 2,5 mm. Die Anodisierung der Auskleidungsbuchsen erzeugt auf diesen eine verschleißfeste Oberflächenschicht. Die durch die Lageraufnahmen 3 gebildeten Lagerstellen des Bolzens 4 sind sogenannte Festlager, d.h. der Bolzen dreht sich in diesen Lageraufnahmen nicht. Die Lageraufnahme der aus Aluminium bestehenden Schwenkteile sind anderseits mit Buchsen aus Kunststoff, wie Teflon, ausgekleidet, um Korrosion zu vermeiden. Es versteht sich, daß die Erfindung in allen Fällen anwendbar ist, in denen Bolzen aus Stahl in Lagerteilen aus Aluminium gelagert werden sollen.

## Patentansprüche

1. Einrichtung zur Lagerung eines Bolzens (4), einer Achse od.dgl. aus Stahl in einem Lagerteil (1) aus Aluminium oder einer Aluminiumlegierung, insbesondere für Schwenkteile von Fahrzeugaufbauten, der eine zylindrische Lageraufnahme (3) für den Bolzen, die Achse od.dgl. aufweist, wobei in die Lageraufnahme (3) des Lagerteiles (1) eine Auskleidungsbuchse (5) aus hartanodisiertem Aluminium eingesetzt ist, in welcher der Bolzen (4) od.dgl. fest gelagert ist.

## Claims

1. Device for supporting a bolt (4), an axle or the like made of steel in a bearing part (1) made of aluminium or an aluminium alloy, in particular for pivoting parts of vehicle structures, which bearing part has a cylindrical bearing receptacle (3) for the bolt, axle or the like, a casing (5) made of hardanodized aluminium being inserted in the bearing receptacle (3) of the bearing part (1), in which the bolt (4) or the like is rigidly supported.

## Revendications

1. Dispositif pour le montage d'une tige (4), d'un axe ou similaire en acier, dans une partie de montage (1) en aluminium ou en alliage d'aluminium, en particulier pour des pièces pivotantes de superstructures de véhicule, qui comporte un logement de montage cylindrique (3) pour la tige, pour l'axe ou similaire, et une douille d'habillage (5) en aluminium à anodisation dure est mise en place dans le logement de montage (3) de la partie de montage (1), habillage dans lequel la tige (4) ou similaire est fermement montée.
